# EUROPÄISCHE PATENTANMELDUNG

(11) **EP 4 752 246 A1**
(43) Veröffentlichungstag der Anmeldung: **03.06.2026**
(21) Anmeldenummer: 25214610.5
(22) Anmeldetag: 10.11.2025
(51) Int. Cl.: C22C 9/00, C22C 9/01, H01R 43/02

(54) **ELEKTRISCHE DURCHFÜHRUNG**

(30) Priorität: 28.11.2024 DE 102024135169
(71) Anmelder: SCHOTT AG, 55122 Mainz (DE)
(72) Erfinder: HARTL, Helmut, 1210 Wien (AT)
(74) Vertreter: Schott Corporate IP

(57) **Zusammenfassung**

Es wird eine elektrische Durchführung (1) bereitgestellt umfassend einen Grundkörper (10) mit einer Öffnung und einen Anschlussstift (14), der durch die Öffnung (11) im Grundkörper (10) hindurchgeführt ist und mit einem Fixiermaterial (12) gehalten ist, welches die Öffnung (11) abdichtet, wobei das Fixiermaterial (12) ein Glasmaterial, Glaskeramikmaterial oder eine Keramik ist. Ferner ist vorgesehen, dass der Anschlussstift (14) einen Kern (15) aufweist oder aus diesem besteht, wobei der Kern (15) direkt an das Fixiermaterial (12) angrenzt und aus einem Kupferwerkstoff besteht, wobei der Kupferwerkstoff in einem geglühten Zustand nach dem Ausbilden der elektrischen Durchführung (1) eine 0,2% Dehngrenze von mindestens 150 N/mm² aufweist.

## Beschreibung

Die Erfindung betrifft eine elektrische Durchführung umfassend einen Grundkörper mit einer Durchgangsöffnung und einen in der Durchgangsöffnung angeordneten Anschlussstift, der über ein Fixiermaterial elektrisch isolierend in der Durchgangsöffnung gehalten ist. Ein weiter Aspekt der Erfindung betrifft einen elektrischen Energiespeicher, einen elektrischen Steckverbinder sowie einen elektrisch angetriebenen Kompressor, der zumindest eine solche Durchführung umfasst.

### Stand der Technik

Gehäuse für elektrische oder elektronische Komponenten erfordern in der Regel eine Vielzahl von elektrischen Durchführungen, um elektrische Verbindungen von außen in das Innere des Gehäuses zu ermöglichen. Die elektrischen Durchführungen müssen flüssigkeitsdicht oder sogar hermetisch dicht sein, um die Komponenten im Gehäuse vor der Umgebung zu schützen und/oder um Gase oder Flüssigkeiten im Inneren des Gehäuses zu halten. Um solche flüssigkeitsdichten oder hermetischen Durchführungen für einen elektrischen Leiter zu erhalten, der in einer Öffnung eines Grundkörpers angeordnet ist, können Metall-Fixiermaterial Durchführungen verwendet werden. Der Grundkörper kann ein Gehäuse oder ein Teil eines Gehäuses sein. Ein Fixiermaterial, beispielsweise ein Glasmaterial, wird dabei verwendet, um die Öffnung abzudichten und den Leiter in der Öffnung zu halten. Das Fixiermaterial sorgt auch für eine elektrische Isolierung zwischen dem Leiter und dem Grundkörper.

Derartige elektrische Durchführungen finden beispielsweise Verwendung in Gehäusen für elektrische Energiespeicher wie Batterien oder Kondensatoren oder bei elektrischen Durchführungen für elektrisch angetriebene Kompressoren (E-Kompressoren). Insbesondere bei Anwendungen, bei denen hohe elektrische Ströme durch die elektrische Durchführung fließen, sind für den Anschlussstift Materialien mit hoher elektrischer Leitfähigkeit bevorzugt. Kupfer und viele Kupferlegierungen weisen eine hohe elektrische Leitfähigkeit auf.

Aus WO 2018/114392 A2 ist eine elektrische Durchführung mit einem Grundkörper aus einem Leichtmetall wie Aluminium bekannt. Ein durch eine Öffnung im Grundköper hindurchgeführter Anschlussstift kann aus Kupfer oder einer Kupferlegierung bestehen und wird über ein Glas- oder Glaskeramikmaterial in der Öffnung gehalten.

Bei den aus dem Stand der Technik bekannten elektrischen Durchführungen mit einem Anschlussstift aus Kupfer oder aus üblichen Kupferlegierungen tritt jedoch das Problem auf, dass die elektrischen Durchführungen undicht werden können, wenn elektrische Kontakte mit dem Anschlussstift mittels Schweißen oder Löten verbunden werden.

Es ist entsprechend eine Aufgabe der Erfindung eine elektrische Durchführung bereitzustellen, welche auch nach einem Verschweißen oder Verlöten des Anschlussstifts dicht ist.

### Offenbarung der Erfindung

Es wird eine elektrische Durchführung vorgeschlagen, welche einen Grundkörper mit einer Öffnung und einen Anschlussstift umfasst, wobei der Anschlussstift durch die Öffnung im Grundkörper hindurchgeführt ist und mit einem Fixiermaterial gehalten ist, welches die Öffnung abdichtet, wobei das Fixiermaterial ein Glasmaterial, Glaskeramikmaterial oder eine Keramik ist.

Ferner ist vorgesehen, dass der Anschlussstift einen Kern aufweist oder aus diesem besteht, wobei der Kern direkt an das Fixiermaterial angrenzt und aus einem Kupferwerkstoff besteht, wobei der Kupferwerkstoff in einem geglühten Zustand nach dem Ausbilden der elektrischen Durchführung eine 0,2% Dehngrenze von mindestens 150 N/mm², bevorzugt von mindestens 200 N/mm², besonders bevorzugt mindestens 300 N/mm² aufweist. Bevorzugte Kupferwerkstoffe weisen eine 0,2% Dehngrenze von bis zu 500 N/mm² oder sogar von bis zu 600 N/mm² auf.

Unter einem Kupferwerkstoff wird hierbei insbesondere ein Material verstanden, welches zu einem überwiegenden Anteil aus Kupfer besteht, insbesondere mehr als 50 Gew.-% Kupfer umfasst, bevorzugt mehr als 75 Gew.-%, besonders bevorzugt mehr als 85 Gew.-% Kupfer umfasst.

Bei elektrischen Durchführungen mit einem Anschlussstift aus Kupfer oder üblichen Kupferlegierungen tritt das Problem auf, dass das Kupfer bzw. die Kupferlegierung nach einer Temperaturbehandlung, wie diese beim Bilden einer Metall-Fixiermaterial Durchführung mit einem Glasmaterial oder einem Glaskeramikmaterial erforderlich ist, seine Eigenschaften verändert. Bei üblichen Kupferlegierungen, welche vor dem Erhitzen eine ausreichende 0,2% Dehngrenze von über 150 N/mm² aufweisen, sinkt diese nach der Wärmebehandlung zum Ausbilden der Metall-Fixiermaterial Durchführung auf einen Wert unterhalb von 150 N/mm² ab.

Die 0,2 % Dehngrenze ist diejenige (einachsige) mechanische Spannung, bei der die auf die Anfangslänge einer Probe bezogene bleibende Dehnung nach Entlastung genau 0,2 % beträgt. Die 0,2% Dehngrenze wird durch bekannte Verfahren gemessen. Die 0,2% Dehngrenze ist mittels Zugversuch einfach zu ermitteln. Ein solcher Zugversuch ist beispielsweise der Zugversuch gemäß ISO 6892-1:2020-06, mit dem die Dehngrenze Rp 0,2 ermittelt wird. Der Zugversuch an Metall gem. ISO 6892 wird üblicherweise auf einer Universalprüfmaschine / Zugprüfmaschine durchgeführt.

Eine 0,2% Dehngrenze nach dem Glühen bzw. der Temperaturbehandlung zum Ausbilden der elektrischen Durchführung unterhalb von einem Wert von 150 N/mm² ist problematisch, da Materialien mit geringer 0,2% Dehngrenze sich leicht plastisch deformieren lassen. Eine nach dem Ausbilden der elektrischen Durchführung erfolgte plastische Deformation des Anschlussstifts kann aber zur Folge haben, dass die elektrische Durchführung undicht wird. Eine solche plastische Deformation wurde an bekannten elektrischen Durchführungen mit Anschlussstift aus Kupfer oder üblichen Kupferlegierungen insbesondere dann beobachtet, wenn die elektrische Durchführung ungleichmäßiger Erwärmung ausgesetzt wurde. Eine solche ungleichmäßige Erwärmung tritt insbesondere dann auf, wenn an den Anschlussstift mittels Schweißen oder Löten elektrische Verbinder wie Anschlussfahnen und Leiter angebracht werden. Durch das Schweißen erhitzt sich der Anschlussstift stark, während das Glas- oder Glaskeramikmaterial Wärme schlecht leitet und somit kalt bleibt. Das Material des Anschlussstifts dehnt sich aufgrund der Erwärmung aus, während die restlichen Komponenten der elektrischen Durchführung kaum erwärmt werden und ihre Dimensionen weitgehend beibehalten.

Das Fixiermaterial, welches den Anschlussstift umgibt, wirkt der Ausdehnung des Anschlussstifts entgegen und übt entsprechend Druckkräfte auf den Anschlussstift aus. Erreicht eine durch die Druckkräfte verursachte Verformung den plastischen Bereich, wird der Anschlussstift dauerhaft in seiner Form verändert. Nach einem Erkalten zieht sich der Anschlussstift wieder zusammen, wobei aufgrund der dauerhaften plastischen Formänderungen nun Risse zwischen dem Fixiermaterial und dem Anschlussstift auftreten. Die elektrische Durchführung wird dadurch undicht.

Bei erfindungsgemäßer Wahl des Kupfermaterials des Anschlussstifts derart, dass dieser auch nach der Wärmebehandlung zur Ausbildung der elektrischen Durchführung eine 0,2% Dehngrenze von mindestens 150 N/mm² aufweist, ist eine bei einer ungleichmäßigen Erhitzung auftretende Deformation, z.B. beim Anschweißen eines elektrischen Kontakts, im elastischen Bereich und damit nicht dauerhaft. Nach dem Abkühlen des Anschlussstifts nimmt dieser seine ursprünglichen Abmessungen wieder ein, so dass die erfindungsgemäße Durchführung dicht bleibt.

Die gebildete Metall-Fixiermaterial Durchführung ist bevorzugt hermetisch dicht, wobei eine Durchführung mit einer He Leckrate von weniger als 1•10⁻⁷ mbar I/s, bevorzugt weniger 1•10⁻⁸ mbar I/s bei einer Druckdifferenz von 1 bar als hermetisch dicht angesehen wird. Die Durchführung ist insbesondere auch nach einmaligem oder mehrmaligem Erhitzen des Anschlussstifts auf eine Temperatur oberhalb von 500°C, bevorzugt oberhalb von 550°C, besonders bevorzugt oberhalb von 600°C, hermetisch dicht.

Bevorzugt handelt es sich bei dem Kupferwerkstoff um einen dispersionsgehärteten Kupferwerkstoff, insbesondere um einen OSD (oxide dispersion strengthened) Kupferwerkstoff. Derartige OSD-Werkstoffe zeichnen sich durch hohe Festigkeit, auch bei hohen Temperaturen, und eine gute Korrosionsbeständigkeit aus. Durch feinverteilte Oxide besitzt der OSD-Werkstoff selbst bei sehr hohen Temperaturen nicht die Möglichkeit zu diffundieren, wodurch auch verhindert wird, Korngrenzen zu thermodynamisch energetisch niedrigeren Zuständen wandern zu lassen. Diese Eigenschaften beruhen auf homogen in der Matrix verteilten, oxidischen Dispersoiden, die typischerweise nur einige Nanometer groß sind.

Insbesondere tritt bei diesen dispersionsgehärteten Kupferwerkstoffen bei Temperaturen von bis zu 900 °C, also nahe dem Schmelzpunkt von Kupfer (1083 °C), keine Rekristallisation auf. Eine solche Rekristallisation tritt bei Kupfer oder üblichen Kupferlegierungen spätestens ab 550°C auf und führt zu einem Festigkeitsverlust und damit zu einer Abnahme der 0,2% Dehngrenze.

Bevorzugt enthält der Kupferwerkstoff mindestens 95 Gew.-%, bevorzugt mindestens 98 Gew.-%, besonders bevorzugt mindestens 99 Gew.-% Kupfer und enthält zusätzlich mindestens 0,1 Gew.-%, bevorzugt mindestens 0,5 Gew.-%, besonders bevorzugt mindestens 0,6 Gew.-% Al₂O₃ und/oder mindestens 0,03 Gew.-% Bor. Der Anteil an Al₂O₃ beträgt bevorzugt höchstens 2 Gew.-%.

Weitere bevorzugte Kupferwerkstoffe sind Kupferlegierungen mit einer 0,2% Dehngrenze nach dem Einglasen von mindestens 150 N/mm². Bevorzugt ist die Kupferlegierung ausgewählt aus Cu-Al₂O₃, CuBe, insbesondere CuBe2, CuCr, insbesondere CuCr1Zr, CuCoNiBe, insbesondere CuCo1NiBe, CuZr, CuNiSi, insbesondere CuNi2Si und CuNiSiCr, insbesondere CuNi2SiCr.

Der Grundkörper der elektrischen Durchführung kann als Gehäuse oder Teil eines Gehäuses ausgebildet sein. Das Gehäuse kann insbesondere ein Gehäuse für einen elektrischen Energiespeicher wie eine Batterie oder ein Kondensator sein, oder ein Gehäuse für einen elektrisch angetriebenen Kompressor sein.

Das Material des Grundkörpers ist ein Metallmaterial. Bevorzugt wird ein Metallmaterial gewählt, welches einen Wärmeausdehnungskoeffizienten aufweist, der gleich groß oder größer ist als der Wärmeausdehnungskoeffizient des Fixiermaterials und/oder des Kupfermaterials.

Das Material des Grundkörpers ist bevorzugt ausgewählt aus Leichtmetall, Leichtmetall-Legierung, AlSiC, Stahl, insbesondere ferritischer, austenitischer oder Duplex-Stahl, rost-freier Stahl, Edelstahl, Werkzeugstahl. Bei dem Leichtmetall bzw. Leichtmetall-Legierung kann es sich vorteilhaft um Aluminium, Aluminium-Legierung, Titan, Titan-Legierung, Magnesium oder Magnesium-Legierung handeln. Bevorzugt ist das Material des Grund-körpers ausgewählt aus Aluminium oder Aluminium-Legierung oder AlSiC. AlSiC weist eine Matrix aus SiC auf, die mit Al infiltriert ist.

Im Rahmen der Offenbarung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Das Fixiermaterial ist ausgewählt aus einem Glasmaterial oder einem Glaskeramikmaterial.

Bevorzugte Gläser umfassen technische Gläser, insbesondere oxidische Gläser, welche bevorzugt gegen übliche Materialien im Zusammenhang mit elektrischen Energiespeichern chemisch beständig sind.

Im Fall eines technischen Glases ist das Fixiermaterial beispielsweise ein Aluminiumphosphatglas, welches Al₂O₃ und P₂O₅ umfasst, ein Aluminiumboratglas, welches Al₂O₃ und B₂O₃ umfasst, oder ein Bismut-Glas, welches beispielsweise Bi₂O₃ als Glasbildner umfasst. Alternativ können auch Gläser, die Bleioxid als Glasbildner umfassen, insbesondere Gläser aus dem PbO-B₂O₃-System, oder Vanadiumhaltige Gläser als Fixiermaterial zum Einsatz kommen.

Beispiele für geeignete Gläser umfassen Phosphatgläser. Ein geeignetes Phosphatglas, welches bei vergleichsweise niedrigen Temperaturen von 500°C bis 650°C mit den Metallen des Grundkörpers und des Anschlussstifts verschmolzen werden kann, ist beispielsweise aus WO 2012/110247 A1 bekannt.

Für das Herstellen der elektrischen Durchführung kann das Fixiermaterial bzw. ein Vorläufermaterial in Gestalt eines Formkörpers bereitgestellt werden. Der Formkörper kann beispielsweise die Form eines Hohlzylinders haben. Zur Ausbildung der elektrischen Durchführung wird der Anschlussstift in das Innere dieses Hohlzylinders eingesetzt und dieser wird wiederum in eine Öffnung eines Grundkörpers eingesetzt. Der Anschlussstift wird dabei so in das Innere des Hohlzylinders eingesetzt, dass der Übergang von Kern zu Abdeckmaterial außerhalb des Fixiermaterials liegt. Das Verbinden des Fixiermaterials mit der Wandung der Öffnung und der Wandung des Anschlussstifts erfolgt über eine Temperaturbehandlung. Im Falle eines Glases oder eine Glaskeramik erfolgt dabei ein Anglasen des Fixiermaterials an die Metallmaterialien des Grundkörpers und des Anschlussstifts. Das Verbinden erfolgt bei einer Temperatur oberhalb von 500°C, bevorzugt bei einer Temperatur oberhalb von 550°C, besonders bevorzugt oberhalb von 600°C, wobei die Temperatur für eine Zeitdauer von mindestens 10 Minuten, bevorzugt mindestens 15 Minuten, gehalten wird.

Entsprechend ist somit das Kupfermaterial der elektrischen Durchführung durch die Temperaturbehandlung geglüht worden, wobei dieses Glühen ebenfalls bei einer Temperatur oberhalb von 500°C, bevorzugt von 550°C, besonders bevorzugt oberhalb von 600°C, für eine Zeitdauer von mindestens 10 Minuten, bevorzugt mindestens 15 Minuten, erfolgt ist.

Vorzugsweise bilden der Grundkörper, der mindestens eine Leiter und das Fixiermaterial eine Metall-Fixiermaterial Durchführung in Form einer Druckeinglasung. Dementsprechend wird ein erster Wärmeausdehnungskoeffizient des Grundkörpers vorzugsweise größer als ein zweiter Wärmeausdehnungskoeffizient des Fixiermaterials gewählt. Um eine Druckeinglasung zu erhalten, sollte der Unterschied zwischen dem ersten und dem zweiten Wärmeausdehnungskoeffizienten in dem Temperaturbereich von 300 K bis 600 K vorzugsweise mindestens 3 ppm/K und weiter bevorzugt mindestens 5 ppm/K betragen. Ein dritter Wärmeausdehnungskoeffizient des Leitermaterials des Anschlussstifts wird vorzugsweise so gewählt, dass dieser etwa gleich ist oder kleiner ist als der zweite Wärmeausdehnungskoeffizient des Fixiermaterials. Zwei Wärmeausdehnungskoeffizienten werden als ungefähr gleich angesehen, wenn die Differenz weniger als 3 ppm/K beträgt.

Alternativ zu einer Druckeinglasung können das Material des Grundkörpers, das Fixiermaterial und das Material des Anschlussstifts so gewählt werden, dass ihre jeweiligen Wärmeausdehnungskoeffizienten ungefähr gleich sind, wobei eine Differenz von weniger als 3 ppm/K als ungefähr gleich angesehen wird. In dieser Variante bilden der Grundkörper, der Anschlussstift und das Fixiermaterial eine angepasste Metall-Fixiermaterial Durchführung aus.

Bevorzugt weist das Fixiermaterial eine Höhe und der Grundkörper in einem an die Durchgangsöffnung angrenzenden Bereich eine Dicke auf, wobei in einem Kontaktbereich zwischen Grundkörper und Fixiermaterial die Höhe des Fixiermaterials geringer ist als die Dicke des Grundkörpers. Insbesondere im Zusammenhang mit einer Druckeinglasung kann es vorteilhaft sein, wenn die Höhe des Fixiermaterials, insbesondere bezogen auf einen Kontaktbereich mit dem Grundkörper, geringer ist als die Dicke des Grundkörpers in diesem Kontaktbereich. Das Fixiermaterial ist somit in Bezug auf den Grundkörper mindestens auf einer Seite der Durchführung zurückgesetzt, d.h. es liegt ein Versatz zwischen Fixiermaterial und Grundkörper vor. Durch diese Maßnahme können Druckspitzen direkt am Kontakt zwischen Grundkörper und Fixiermaterialrand vermieden bzw. reduziert werden. Dadurch ist die Gefahr von Materialschäden am Fixiermaterial reduziert. In einer vorteilhaften Variante kann das Fixiermaterial beidseits, d.h. auf beiden Seiten der Durchführung zurückgesetzt sein, vorzugsweise um denselben Betrag.

Bei einer solchen vorteilhaften Ausführung ragt eine an die Durchgangsöffnung angrenzende Oberfläche des Grundkörpers an mindestens einer Seite der Durchführung über das Fixiermaterial hinaus. Der Grundkörper bildet somit auf einer Seite der Durchführung oder auf beiden Seiten der Durchführung einen Überstand.

Es kann vorteilhaft sein, wenn die Differenz, d.h. der Unterschied, zwischen Höhe des Fixiermaterials und Dicke des Grundkörpers in Summe maximal 30%, bevorzugt maximal 26% oder maximal 24% beträgt. Eine vorteilhafte Untergrenze für die Differenz kann in Summe 10% oder 14% oder 16% sein, d.h. die Höhe des Fixiermaterials ist beispielsweise in Summe 10 bis 30% kleiner als die Dicke des Grundkörpers. Die Differenz kann unsymmetrisch auf beide Seiten der Durchführung verteilt sein. Vorteilhaft ist sie symmetrisch auf beide Seiten der Durchführung verteilt, so dass das Fixiermaterial auf jeder Seite vorteilhaft um mindestens 5% oder mindestens 7% oder mindestens 8% und/oder vorteilhaft um maximal 15% oder maximal 13% oder maximal 12% zurückgesetzt ist. Somit kann bei einer vorteilhaften Durchführung ein Versatz zwischen Grundkörper und Fixiermaterial vorliegen, wobei das Fixiermaterial auf jeder Seite jeweils um 5 bis 15%, bevorzugt jeweils um 8 bis 12% gegenüber dem Grundkörper im an die Durchgangsöffnung angrenzenden Bereich zurückgesetzt ist.

Bevorzugt sind der Grundkörper und der Anschlussstift derart ausgebildet und angeordnet, dass eine Stirnseite oder beide Stirnseiten des Anschlussstifts bündig zu einer Oberfläche des Grundkörpers angeordnet sind. Weist der Grundkörper Bereiche mit unterschiedlichen Dicken auf, so ist es bevorzugt, dass die Stirnseite bündig mit der an die Durchgangsöffnung angrenzende Oberfläche des Grundkörpers abschließt. Insbesondere bei Kombination mit einem bündig mit der Oberfläche des Grundkörpers abschließenden Fixiermaterial wird dadurch eine ebene Form der elektrischen Durchführung erreicht und die Durchführung weist vorteilhafterweise eine möglichst geringe Bauhöhe auf.

Alternativ dazu kann eine Stirnseite oder können beide Stirnseiten des Anschlussstifts über eine Oberfläche des Grundkörpers hinausragen. Hierdurch wird eine erhöhte Kontaktfläche geschaffen, welche ein einfaches elektrisches Kontaktieren des Anschlussstifts erlaubt, beispielsweise durch Anschweißen von Anschlussfahnen.

Die elektrische Durchführung kann genau eine Öffnung mit genau einem Anschlussstift aufweisen. Es ist jedoch je nach Anwendungsfall der elektrischen Durchführung möglich, mehrere Öffnungen im Grundkörper vorzusehen und jeweils einen Anschlussstift durch jede der Öffnungen hindurchzuführen. Auch kann vorgesehen sein, durch eine Öffnung mehrere Anschlussstifte hindurchzuführen, wobei diese durch das Fixiermaterial gehalten werden und gegeneinander elektrisch isoliert werden.

Bevorzugt weist der Anschlussstift der elektrischen Durchführung, welche für einen elektrischen Energiespeicher vorgesehen ist, eine Länge im Bereich von 2 mm bis 8 mm, vorzugsweise 3 mm bis 6 mm auf. Der Durchmesser des Anschlussstifts liegt bevorzugt im Bereich 1 mm bis 20 mm, vorzugsweise 2 mm bis 10 mm. Bevorzugt weist der Anschlussstift der elektrischen Durchführung, welche als Anschlussterminal für einen E-Kompressor oder für einen Steckverbinder vorgesehen ist, eine Länge im Bereich von 10 mm bis 80 mm, vorzugsweise 20 mm bis 60 mm auf. Der Durchmesser des Anschlussstifts liegt bevorzugt im Bereich 1 mm bis 10 mm, vorzugsweise 2 mm bis 5 mm.

Der Anschlussstift weist bevorzugt eine Zylinderform auf. Vorteilhaft kann er einen zylinderförmigen Körper aufweisen oder als zylinderförmiger Körper vorliegen, so dass der Anschlussstift eine Mantelfläche und zwei Stirnseiten aufweist. Dabei ist die Mantelfläche des Zylinders zum Fixiermaterial gerichtet. Besonders bevorzugt weist der Anschlussstift eine Kreiszylinderform auf. Neben der Kreiszylinder-form sind auch allgemeine Zylinderformen mit anderen Formen der Stirnseiten denkbar. Beispielsweise sind ovale Formen oder Rechtecke mit abgerundeten Ecken denkbar. Des Weiteren kann der Anschlussstift beispielsweise eine sogenannte Nagelkopf-Form aufweisen, die beispielsweise durch zwei aneinander angrenzende Zylinder gebildet werden kann. Dabei wird eine erste Stirnseite eines solchen nagelkopfförmigen Anschlussstifts durch eine Zylinderstirnseite mit der größeren Fläche und eine zweite Stirnseite durch eine Zylinderstirnseite mit der kleineren Fläche gebildet.

Bevorzugt ist der Anschlussstift an zumindest einer Stirnseite teilweise oder vollständig mit einem elektrisch leitenden Abdeckmaterial bedeckt.

Das Abdeckmaterial kann beispielsweise mittels Plattieren, Galvanisieren, Beschichten, Aufdampfen, Schweißen oder Löten auf die Stirnfläche des Anschlussstifts aufgebracht sein.

Bevorzugt ist das Abdeckmaterial ausgewählt aus der Gruppe umfassend Aluminium, einer Aluminiumlegierung, AlSiC, Kupfer, eine Kupferlegierung, Molybdän, Nickel oder Nickellegierungen, Palladium, Silber und Gold.

Die Dicke bzw. Länge des Abdeckmaterials beträgt vorteilhaft 50% bis 5%, bevorzugt 40% bis 10%, besonders bevorzugt 30 bis 20% der Länge des Anschlussstifts. Die Dicke bzw. Länge des Abdeckmaterials kann vorteilhaft maximal oder weniger als 50%, vorzugsweise maximal 45%, bevorzugt maximal 40%, bevorzugt maximal 30%, in manchen vorteilhaften Varianten maximal 25% oder maximal 20% oder maximal 15% betragen. Eine vorteilhafte Untergrenze für die Dicke bzw. Länge des Abdeckmaterials kann mindestens 5% oder mindestens 10%, vorzugsweise mindestens 20%, in manchen vorteil-haften Varianten mindestens 25% betragen.

Ist der Anschlussstift auf beiden Stirnseiten jeweils mit einem Abdeckmaterial versehen, so können die Abdeckmaterialien identisch oder verschieden gewählt sein. Insbesondere im Fall der Ausgestaltung der elektrischen Durchführung als Deckel für einen elektrischen Energiespeicher oder als Teil eines Gehäuses für einen elektrischen Energiespeicher kann beispielsweise auf einer nach innen weisenden Seite ein Material gewählt werden, welches beständig gegenüber einem im Inneren aufgenommenen Elektrolyten ist, und auf der Außenseite ein anderes Material wie Aluminium oder eine Aluminiumlegierung gewählt werden.

Das Abdeckmaterial kann dabei die jeweilige Stirnseite vollständig bedecken oder auch nur einen Teil davon überdecken.

Bevorzugt ist der Kern des Anschlussstifts als ein Hülsenelement mit einer Durchgangsöffnung ausgebildet. Eine solche Durchgangsöffnung kann insbesondere verschließbar ausgebildet sein und kann beispielsweise bei der Fertigung eines elektrischen Energiespeichers als Befüllöffnung zum Füllen des Gehäuses mit einem Elektrolyten dienen.

Bevorzugt weist der Anschlussstift ein Verschlusselement auf, welches die Durchgangsöffnung in dem Hülsenelement des Anschlussstifts verschließt.

Bevorzugt ist das Verschlusselement an einer Stirnseite des Hülsenelements mit diesem verbunden. Alternativ oder zusätzlich ist das Verschlusselement bevorzugt an einer Wand der Durchgangsöffnung mit dem Hülsenelement verbunden. Entsprechend kann das Verschlusselement deckelartig ausgestaltet sein und die Durchgangsöffnung überdecken. Das Verschlusselement kann auch stopfenartig ausgestaltet sein, und in die Durchgangsöffnung eingreifen. Dabei sind auch Mischformen für das Verschlusselement möglich.

Bevorzugt besteht das Verschlusselement zumindest an seiner an das Hülsenelement angrenzenden Oberfläche aus Kupfer, einer Kupferlegierung, Aluminium oder einer Aluminiumlegierung. Als Teil des Anschlussstifts kann das Verschlusselement an einer oder an beiden Stirnseiten mit dem Abdeckmaterial versehen sein.

Denkbar ist auch, dass an Oberflächen des Verschlusselements, welche dem Hülsenelement zugewandt sind, und/oder an Oberflächen des Hülsenelements, welche dem Verschlusselement zugewandt sind, ein Zwischenmaterial angeordnet ist. Das Zwischenmaterial kann wie das Abdeckmaterial beispielsweise mittels Plattieren, Galvanisieren, Beschichten, Aufdampfen, Schweißen oder Löten auf die Stirnfläche des Hülsenelements bzw. des Verschlusselements aufgebracht sein.

Das Zwischenmaterial auf dem Verschlusselement bzw. dem Hülsenelement wird bevorzugt so ausgewählt, dass es sich gut mit dem jeweils anderen Element durch Schweißen oder Löten verbinden lässt. Insbesondere kann das Zwischenmaterial identisch zu dem Material des Verschlusselements bzw. dem Hülsenelement gewählt sein. Beispielsweise kann im Fall eines Verschlusselements aus Aluminium das Hülsenelement mit Aluminium als Zwischenmaterial versehen sein.

Der Anschlussstift kann mit einem Anschlusspad und/oder einer Anschlussfahne verbunden sein.

Eine solche Anschlussfahne kann beispielsweise ein Blech oder eine Metallfolie sein, welche mittels Schweißen oder Löten mit dem Anschlussstift verbunden ist. Dabei kann das Material der Anschlussfahne identisch oder verschieden zu dem Material des Anschlussstifts gewählt sein.

Ein solches Anschlusspad ist mit dem Anschlussstift elektrisch verbunden, beispielsweise mittels Kleben, Schweißen oder Löten, und stellt eine gegenüber der Stirnfläche des Anschlussstifts vergrößerte elektrische Kontaktfläche bereit. Das Anschlusspad ist bevorzugt über ein elektrisch isolierendes Material mit dem Grundkörper und/oder dem Fixiermaterial verbunden. Das Material des Anschlusspads ist bevorzugt mit dem Material des Kerns des Anschlussstifts oder einem Abdeckmaterial des Anschlussstifts identisch ausgewählt.

Um das Anschlusspad elektrisch mit dem Anschlussstift verbinden zu können, werden diese dicht aneinander angrenzend angeordnet. Hierzu greift bevorzugt ein über die Durchgangsöffnung im Grundkörper hinausragender Teil des Anschlussstifts in eine Öffnung im Anschlusspad ein, wobei diese Öffnung im Anschlusspad als Durchgangsöffnung oder als Sackloch ausgebildet sein kann. Um eine gute Verbindung zwischen dem zumindest einen Anschlusspad und dem Anschlussstift zu ermöglichen ist es bevorzugt, dass der Anschlussstift mindestens um 0,1 mm bis 2 mm, besonders bevorzugt 0,2 mm bis 1 mm über die Durchgangsöffnung und damit über den Grundkörper hinausragt. Bevorzugt ist das zumindest eine Anschlusspad vollflächig unter Verwendung eines Klebstoffs oder unter Verwendung eines Gussmaterials als Isolationsmaterial elektrisch isolierend an dem Grundkörper befestigt.

Durch die erfindungsgemäße Wahl eines Kupfermaterials mit einer 0,2% Dehngrenze nach der Temperaturbehandlung von mindestens 150 N/mm² kann der Anschlussstift der elektrischen Durchführung auch mehrfach erhitzt werden, ohne dass die elektrische Durchführung undicht wird. Beispielsweise kann eine elektrische Durchführung, welche eine Durchgangsöffnung in dem Anschlussstift aufweist, ein erstes Mal erhitzt werden, um an einer nach Innen weisenden Seite eine Elektrode einer Batterie oder eines Kondensators anzuschließen, ein zweites Mal erhitzt werden, um die Durchgangsöffnung mit einem Verschlusselement zu verschließen, und ein drittes Mal erhitzt werden, um eine Anschlussfahne oder ein Anschlusspad an einer nach Außen weisenden Seite an den Anschlussstift anzuschließen. Die erfindungsgemäße elektrische Durchführung ist auch nach einem solchen mehrmaligen ungleichmäßigem Erhitzen dicht, insbesondere hermetisch dicht.

Um einen Bruch des Fixiermaterials, also des Glas- oder Glaskeramikmaterials insbesondere nach der Einglasung bespielweise aufgrund von Temperatureinwirkungen zu vermeiden kann es vorteilhaft sein, wenn der Grundkörper einen flexiblen Flansch zum Fügen des Grundkörpers mit weiteren Komponenten wie Bestandteilen eines Gehäuses umfasst. Der Flansch selbst umfasst einen Bereich, einen sogenannten Verbindungsbereich, mit dem eine weitere Komponente an den Grundkörper angeschlossen wird. Das Anschließen an den Grundkörper kann durch Verschweißen, insbesondere Ultraschallschweißen oder Löten erfolgen. Die Schweißverbindung wird bevorzugt derart ausgeführt, dass die Verbindung weitgehend gasdicht ist und bevorzugt eine He-Leckrate kleiner 10⁻⁸ mbar I/sec bei 1 bar Druckunterschied zur Verfügung gestellt wird.

Der flexible Flansch kann sehr einfach erhalten werden. So kann beispielsweise der Grundkörper als ein Blechteil mit einer Dicke d₂ ausgeführt sein, welches auf die Dicke d₁, heruntergeprägt wird und nach den Herunterprägen der Abschnitt mit der Dicke d₁, so verformt werden, dass der flexible Flansch ausgebildet wird. Dabei kann vorgesehen sein, dass um den Bereich der Öffnung herum die ursprüngliche Dicke d₂ erhalten bleibt, so dass der an die Öffnung angrenzende Bereich verstärkt ist. Auch ist es möglich, dass ein Blech mit einer Dicke d₁ zu einem flexiblen Flansch geformt wird und das hochgezogene Blech bzw. ein durch Umformen des Blechs gebildeter Kragen die Einglasung aufnimmt. Eine Einglasung in einen hochgezogenen flexiblen Flansch, insbesondere an einen Kragen des flexiblen Flansches, ist insbesondere dann möglich, wenn der flexible Flansch und der hochgezogene Bereich als Material austenitischen Stahl oder Duplex-Stahl umfasst.

In einer vorteilhaften Ausführungsform kann in dem Grundkörper anstelle von oder zusätzlich zu einem flexiblen Flansch eine Entlastungseinrichtung vorgesehen sein. Die Entlastungseinrichtung umfasst vorteilhaft mindestens eine Nut oder Vertiefung, vorzugsweise mindestens eine umlaufende Nut oder umlaufende Vertiefung. Anstelle einer Nut kann auch eine Folge nebeneinander liegender Einstiche vorgesehen sein.

Durch die Entlastungseinrichtung kann ein thermischer Fluss durch den Grundkörper reduziert, also eine thermische Barriere geschaffen, und/oder mechanische Belastung des Grundkörpers senkrecht zur Achse des Anschlussstiftes verringert werden, da der Grundkörper in Richtung senkrecht zur Achse des Anschlussstiftes verformbar, bevorzugt reversibel verformbar ist. Dies führt dazu, dass in das Fixiermaterial weniger Spannungen, insbesondere keine Zugspannungen, die auf das Fixiermaterial wirken und dadurch die Kompression auf das Fixiermaterial reduzieren, eingebracht werden, wodurch die Dichtheit der Durchführung bei thermischen und mechanischen Belastungen verbessert wird.

In einer vorteilhaften ersten Variante ist die Entlastungseinrichtung, insbesondere Nut oder Vertiefung, auf der ersten Seite der elektrischen Durchführung, welche bei Bildung eines Gehäuses nach außen weist, angeordnet. In einer vorteilhaften alternativen zweiten Variante ist die Entlastungseinrichtung, insbesondere Nut oder Vertiefung, auf der zweiten Seite der elektrischen Durchführung, welche bei Bildung eines Gehäuses nach innen weist, angeordnet. In einer besonders vorteilhaften dritten Variante umfasst die Entlastungsvorrichtung mindestens zwei an gegenüberliegenden Seiten des Grundkörpers angeordnete Nuten oder Vertiefungen.

Die hierin beschriebenen elektrischen Durchführungen eignen sich besonders zur Verwendung für Gehäuse von elektrischen Energiespeichern, zur Verwendung in elektrischen Steckverbindern und zur Verwendung in Gehäusen für elektrisch angetriebene Kompressoren.

Entsprechend ist ein weiterer Aspekt der Erfindung, eine elektrische Speichereinrichtung bereitzustellen, insbesondere eine Batterie oder ein Kondensator, welche ein Gehäuse mit mindestens einer der hierin beschriebenen elektrischen Durchführungen umfasst.

In diesem Fall ist der Grundkörper insbesondere als ein Gehäuseteil zum Bilden eines Gehäuses für eine elektrische Speichereinrichtung ausgestaltet. Beispielsweise kann der Grundkörper als ein Deckelteil ausgebildet sein, der zusammen mit einem becherförmigen Gehäuseteil zu einem Gehäuse für eine elektrische Speichereinrichtung gefügt werden kann. Der Grundkörper kann jedoch auch Bestandteil eines Deckels bzw. Deckelteils sein, indem er in eine Öffnung, die in einem Deckelelement ausgebildet ist, eingesetzt ist. Bei der elektrischen Speichereinrichtung kann es sich insbesondere um eine Batterie oder einen Kondensator, einschließlich Superkondensator, handeln, wobei in dem Gehäuse üblicherweise eine oder mehrere Speicherzellen aufgenommen wird und über die elektrische Durchführung als Anschlussterminal von außen elektrisch kontaktiert werden kann. Die Durchführung kann auch als eine mehrpolige Durchführung ausgebildet sein, bei der der Grundkörper mehrere Durchgangsöffnungen aufweist und in jeder der Durchgangsöffnungen jeweils ein Anschlussstift über ein Fixiermaterial gehalten ist.

Üblicherweise ist an Gehäusen für eine Energiespeichereinrichtung ein Sicherheitsventil und/oder eine Sollbruchstelle als Sicherheitselement vorgesehen, um im Fall eines Überdrucks im Inneren diesen kontrolliert abzubauen. Bevorzugt weist die elektrische Durchführung ein solches Sicherheitselement auf. Dazu ist es bevorzugt, eine Auspresskraft für den vom Fixiermaterial gehaltenen Anschlussstift so zu wählen, dass der Anschlussstift bei Überschreiten einer vorgegebenen Auspresskraft herausgedrückt wird. Ein derartiges Anpassen der Auspresskraft ist beispielsweise aus der DE 2020 20106 518 U1 bekannt.

Bevorzugt ist das Fixiermaterial und dessen Verbindung mit der Wandung der Durchgangsöffnung und dem Anschlussstift derart ausgeführt, dass über einer vorgegebenen Auspresskraft eine Sicherheitsventilfunktion bereitgestellt wird, wobei die vorgegebene Auspresskraft durch eine oder mehrere der nachfolgenden Maßnahmen eingestellt wird:
a. Auswählen der Dicke der Einglasung,
b. Auswahl des Fixiermaterials,
c. Auswählen des Blasenanteils im Fixiermaterial,
d. Strukturieren der Oberfläche des Fixiermaterials durch Einstellen der Form eines Fixiermaterialformkörpers vor dem Einglasen,
e. Strukturieren der Oberfläche des Fixiermaterials während des Einglasens,
f. Laserbearbeitung der Oberfläche des Fixiermaterials nach der Einglasung,
g. ein- oder zweiseitiges Einbringen von Kerben oder Verjüngungen in das Fixiermaterial und/oder
h. Einbringen von Kerben oder Verjüngungen in den Anschlussstift und/oder den Grundkörper.

Des Weiteren wird ein elektrisch angetriebener Kompressor vorgeschlagen, der ein Gehäuse mit mindestens einer der hierin beschriebenen elektrischen Durchführungen umfasst. Die elektrische Durchführung ist hier beispielsweise als Anschlussterminal ausgestaltet und weist bevorzugt einen länglichen plattenförmigen Grundkörper auf. Der Grundkörper umfasst bevorzugt mehrere Öffnungen durch die jeweils ein Anschlussstift in Form eines elektrischen Leiters hindurchgeführt ist.

Zudem wird ein elektrischer Steckverbinder vorgeschlagen, der mindestens eine der hierin beschriebenen elektrischen Durchführung aufweist.

Die Erfindung soll nachfolgend anhand der Figuren und ohne Beschränkung hierauf eingehender beschrieben werden. Gleiche Bezugszeichen bezeichnen dabei gleiche oder ähnliche Elemente.

Es zeigen:
Fig. 1: ein Beispiel für eine elektrische Durchführung mit einem einzigen Anschlussstift,
Fig. 2 ein Beispiel für eine elektrische Durchführung mit drei durchgeführten Anschlussstiften,
Fig. 3 ein Beispiel für eine elektrische Durchführung mit einem einseitig plattierten Anschlussstift,
Fig. 4 ein Beispiel für eine elektrische Durchführung mit einem beidseitig plattierten Anschlussstift,
Fig. 5 ein Beispiel für eine elektrische Durchführung mit einem beidseitig plattierten Anschlussstift, der über den Grundkörper hinausragt,
Fig. 6: ein Beispiel für eine elektrische Durchführung mit einem Anschlussstift mit Durchgangsöffnung,
Fig. 7: ein Beispiel für eine elektrische Durchführung mit einem Anschlussstift mit Durchgangsöffnung und einem Verschlusselement,
Fig. 8: ein Beispiel für eine elektrische Durchführung mit einem Anschlussstift mit einseitig plattiertem Verschlusselement,
Fig. 9: ein Beispiel für eine elektrische Durchführung mit einem Anschlussstift mit beidseitig plattiertem Verschlusselement,
Fig. 10: ein Beispiel für eine elektrische Durchführung mit einem mit dem Anschlussstift verbundenen Anschlusspad,
Fig. 11: ein Beispiel für eine elektrische Durchführung mit einem einseitig plattiertem Anschlussstift und mit dem Anschlussstift verbundener Kontaktfahne,
Fig. 12: ein Beispiel für eine elektrische Durchführung mit einem deckelförmigen Verschlusselement,
Fig. 13: ein weiteres Beispiel für eine elektrische Durchführung mit einem Anschlussstift mit Durchgangsöffnung,
Fig. 14: ein zweites Beispiel für eine elektrische Durchführung mit einem deckelförmigen Verschlusselement,
Fig. 15: ein Beispiel für eine elektrische Durchführung mit einem Grundkörper mit flexiblem Flansch und
Fig. 16 ein Beispiel für eine elektrische Durchführung mit einem Grundkörper mit einer Entlastungseinrichtung.

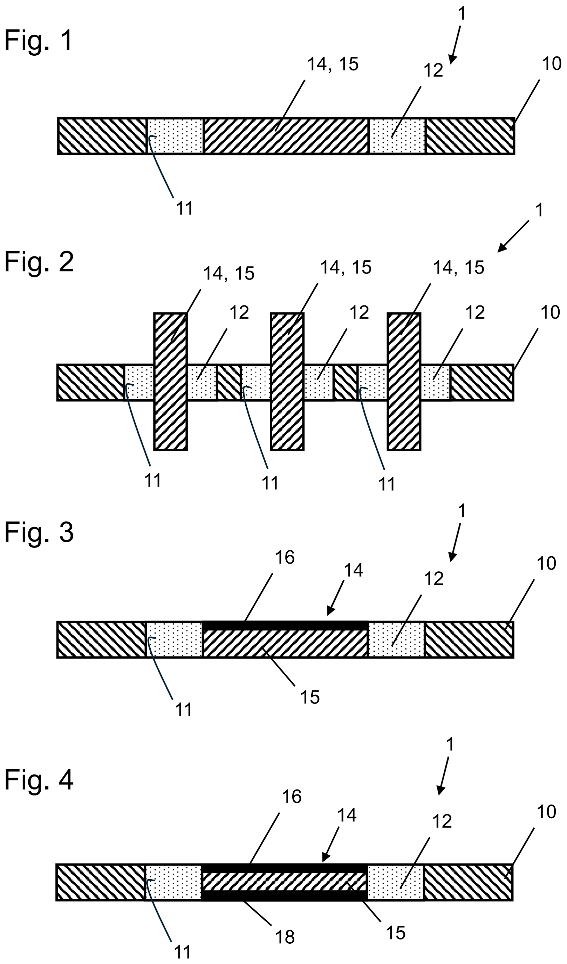

Figur 1 zeigt schematisch ein erstes Ausführungsbeispiel einer elektrischen Durchführung 1. Die elektrische Durchführung 1 umfasst einen Grundkörper 10 mit einer Öffnung 11. Durch die Öffnung 11 ist ein Anschlussstift 14 hindurchgeführt, der hier aus einem massiven einstückigen Kern 15 besteht und in der Öffnung 11 über ein Fixiermaterial 12 gehalten ist. Das Fixiermaterial 12 dichtet dabei sowohl gegenüber einer Wandung der Öffnung 11 als auch gegenüber dem Anschlussstift 14 ab, so dass die Öffnung 11 durch das Fixiermaterial 12 abgedichtet ist. Das Fixiermaterial 12, welches ein Glasmaterial, Glaskeramikmaterial oder Keramikmaterial ist, ist an die Oberflächen der Öffnung 11 des Grundkörpers 10 und des Anschlussstifts 14 angeschmolzen. Dazu wurde eine Rohanordnung aus dem Grundkörper 10, einem Fixiermaterialrohling und dem Anschlussstift 14 in einem Ofen einer Temperaturbehandlung unterzogen, bei der die Rohanordnung einer Temperatur oberhalb der Schmelztemperatur des Fixiermaterials ausgesetzt ist, wobei die Schmelztemperatur typischerweise oberhalb von 500°C oder sogar oberhalb von 600°C liegt.

In dem in Figur 1 gezeigten ersten Ausführungsbeispiel ist der Anschlussstift 14 einstückig und massiv ausgestaltet und besteht aus einem Kupfermaterial, welches nach der Temperaturbehandlung zum Anschmelzen des Fixiermaterials eine 0,2% Dehngrenze von mindestens 150 N/mm² aufweist. Das so ausgewählte Material für den Anschlussstift 14 ist auch nach der Temperaturbehandlung resistent gegen plastische Verformungen. Dies ist insbesondere dann vorteilhaft, wenn die elektrische Durchführung 1 ungleichmäßig erwärmt wird, wobei der Anschlussstift 14 erhitzt wird, während das Fixiermaterial 12 und der Grundkörper 10 kalt bleiben. Dies kann beispielsweise beim Anlöten oder Anschweißen elektrischer Kontakte an den Anschlussstift 14 erfolgen. Durch das Erhitzen des Anschlussstifts 14 dehnt sich dieser aus, wobei das nicht erhitzte Fixiermaterial 12 Druck auf den Anschlussstift 14 ausübt. Bei Verwendung eines Materials mit einer 0,2-% Dehngrenze unterhalb von 150 N/mm² führen diese Druckkräfte zu einer plastischen Deformation des Anschlussstifts 14. Nach einem anschließenden Abkühlen des Anschlussstifts 14, bei dem das Material sich wieder zusammenzieht, kann es nach einer Deformation des Anschlussstifts 14 zu Lücken zwischen dem Fixiermaterial 12 und dem Anschlussstift 14 kommen, wodurch die elektrische Durchführung undicht wird. Bei erfindungsgemäßer Materialwahl bleibt bei der Erhitzung des Anschlussstifts 14 eine plastische Deformation aus, so dass die elektrische Durchführung 1 nach dem Abkühlen dicht bleibt.

In dem ersten Ausführungsbeispiel ist der Anschlussstift 14 bündig mit dem Grundkörper 10 und dem Fixiermaterial 12 ausgeführt. In anderen Ausführungsformen kann der Anschlussstift 14 aber auch an einer oder beiden Seiten über den Grundkörper 14 hinausragen. Das Fixiermaterial 12 kann gegenüber dem Grundkörper 10 zurückgesetzt sein. Ragt der Anschlussstift 14 über den Grundkörper 10 hinaus, so kann das Fixiermaterial ebenfalls teilweise über den Grundkörper 10 hinausragen.

Figur 2 zeigt ein zweites Ausführungsbeispiel einer elektrischen Durchführung 1, bei der der Grundkörper 10 mehrere Öffnungen 11 aufweist. Durch jede der Öffnungen 11 ist ein Anschlussstift 14 hindurchgeführt, der hier aus einem Kern 15 in Form eines länglichen elektrischen Leiters besteht. Der Kern besteht wie mit Bezug zur Figur 1 beschrieben aus einem Kupfermaterial. Die Anschlussstifte 14 werden jeweils über das Fixiermaterial 12 in der Öffnung 11 gehalten, wobei das Fixiermaterial 12 die jeweilige Öffnung 11 abdichtet. In dem in Figur 2 dargestellten Beispiel weist die elektrische Durchführung 1 drei durchgeführte Anschlussstifte 14 auf. Die Anzahl der Anschlussstifte kann aber selbstverständlich je nach benötigter Anzahl der elektrischen Kontakte angepasst werden, so dass z.B. auch 2 oder 5 Anschlussstifte 14 durchgeführt werden können.

Das in Figur 2 dargestellte zweite Ausführungsbeispiel ist insbesondere zur Verwendung als Anschlussterminal für einen elektrisch angetriebenen Kompressor geeignet.

Figur 3 zeigt ein drittes Ausführungsbeispiel einer elektrischen Durchführung 1. Das dritte Ausführungsbeispiel entspricht dem mit Bezug zur Figur 1 beschriebenen ersten Ausführungsbeispiel, der Anschlussstift 14 weist jedoch einen Kern 15 auf, der an einer seiner Stirnseiten mit einem Abdeckmaterial 16 bedeckt ist. Das Abdeckmaterial 16 ist von dem Kupfermaterial des Kerns 15 verschieden. Das Abdeckmaterial 16 kann beispielsweise ausgewählt sein, um eine gute Löt- oder Schweißbarkeit mit einem elektrischen Anschluss zu gewährleisten. Beispielsweise ist als Abdeckmaterial 16 Aluminium oder eine Aluminiumlegierung ausgewählt.

Figur 4 zeigt ein viertes Ausführungsbeispiel einer elektrischen Durchführung 1. Das vierte Ausführungsbeispiel entspricht dem mit Bezug zur Figur 3 beschriebenen dritten Ausführungsbeispiel, der Anschlussstift 14 weist jedoch einen Kern 15 auf, der an einer ersten Stirnseite mit dem Abdeckmaterial 16 bedeckt ist und an einer zweiten Stirnseite mit einem weiteren Abdeckmaterial 18 bedeckt ist. Das Abdeckmaterial 16 und das weitere Abdeckmaterial 18 sind von dem Kupfermaterial des Kerns verschieden. Das weitere Abdeckmaterial 18 kann beispielsweise ausgewählt sein, um eine gute Löt- oder Schweißbarkeit mit einem elektrischen Anschluss zu gewährleisten. Im Falle einer Ausgestaltung der elektrischen Durchführung 1 als Batteriedeckel oder Teil eines Batteriedeckels kann das weitere Abdeckmaterial auch so ausgewählt sein, dass es eine besonders hohe Beständigkeit gegenüber einem in der Batterie aufgenommenen Elektrolyten aufweist. Beispielsweise ist als weiteres Abdeckmaterial 18 Aluminium oder eine Aluminiumlegierung ausgewählt.

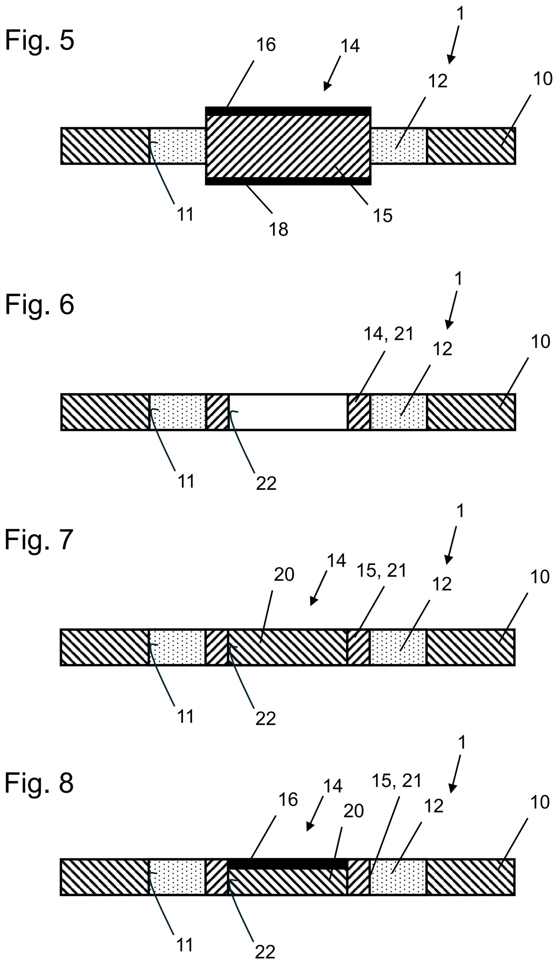

Figur 5 zeigt ein fünftes Ausführungsbeispiel einer elektrischen Durchführung 1. Das fünfte Ausführungsbeispiel entspricht dem mit Bezug zur Figur 4 beschriebenen vierten Ausführungsbeispiel, der Kern 15 des Anschlussstifts 14 ist jedoch nicht bündig mit dem Grundkörper 10 ausgeführt, sondern ragt an beiden Seiten der elektrischen Durchführung 1 über die Oberflächen des Grundkörpers 10 hinaus.

Figur 6 zeigt ein sechstes Ausführungsbeispiel einer elektrischen Durchführung 1. Die elektrische Durchführung 1 umfasst einen Grundkörper 10 mit einer Öffnung 11. Durch die Öffnung 11 ist ein Anschlussstift 14 hindurchgeführt, der hier aus einem einstückigen Kern 15 besteht, der als Hülsenelement 21 ausgebildet ist und eine Durchgangsöffnung 22 aufweist. Der Anschlussstift 14 ist in die Öffnung 11 des Grundkörpers 10 eingesetzt und über ein Fixiermaterial 12 gehalten. Das Fixiermaterial 12 dichtet dabei sowohl gegenüber einer Wandung der Öffnung 11 als auch gegenüber dem Anschlussstift 14 ab, so dass die Öffnung 11 durch das Fixiermaterial 12 abgedichtet ist. Die Durchgangsöffnung 22 bleibt hierbei offen, wobei diese später über ein Verschlusselement 20, vergleiche Figur 7, verschlossen werden kann.

Bei Ausbildung der elektrischen Durchführung 1 als Batteriedeckel oder Teil eines Batteriedeckels kann die Durchgangsöffnung 22 beispielsweise als Befüllöffnung dienen, um die Batterie mit einem Elektrolyten zu befüllen.

Figur 7 zeigt ein siebtes Ausführungsbeispiel für eine elektrische Durchführung 1. Das siebte Ausführungsbeispiel entspricht dem mit Bezug zur Figur 6 beschriebenen sechsten Ausführungsbeispiel, die Durchgangsöffnung 22 in dem als Hülsenelement 21 ausgebildeten Kern 15 ist hier aber nicht offen. Der Anschlussstift 14 weist hier zusätzlich ein Verschlusselement 20 auf, welches die Durchgangsöffnung 22 abdichtet.

Das Verschlusselement 20 ist in dem Beispiel der Figur 7 einstückig und massiv ausgestaltet und kann wie der Kern 15 aus einem Kupfermaterial bestehen. Das Kupfermaterial kann identisch zu dem Kupfermaterial des Kerns gewählt sein. Alternativ dazu kann ein anderes Kupfermaterial oder ein anderes Material wie beispielsweise Aluminium oder eine Aluminiumlegierung gewählt sein. Das Verschlusselement ist hier ähnlich wie ein Stopfen ausgebildet und ist an einer Wandung der Durchgangsöffnung 22 befestigt, beispielsweise mittels Schweißen, Löten oder Kleben.

Figur 8 zeigt ein achtes Ausführungsbeispiel einer elektrischen Durchführung 1, welches weitgehend dem mit Bezug zur Figur 7 beschriebenen siebten Ausführungsbeispiel entspricht. Das Verschlusselement 20 weist in dem Ausführungsbeispiel der Figur 8 zusätzlich ein an einer der Stirnseiten angeordnetes Abdeckmaterial 16 auf. Das Abdeckmaterial 16 ist von dem Material des Verschlusselements 20 verschieden gewählt. Das Abdeckmaterial 16 kann beispielsweise ausgewählt sein, um eine gute Löt- oder Schweißbarkeit mit einem elektrischen Anschluss zu gewährleisten. Beispielsweise ist als Abdeckmaterial 16 Aluminium oder eine Aluminiumlegierung ausgewählt und als Material für das Verschlusselement 20 ist ein Kupfermaterial gewählt.

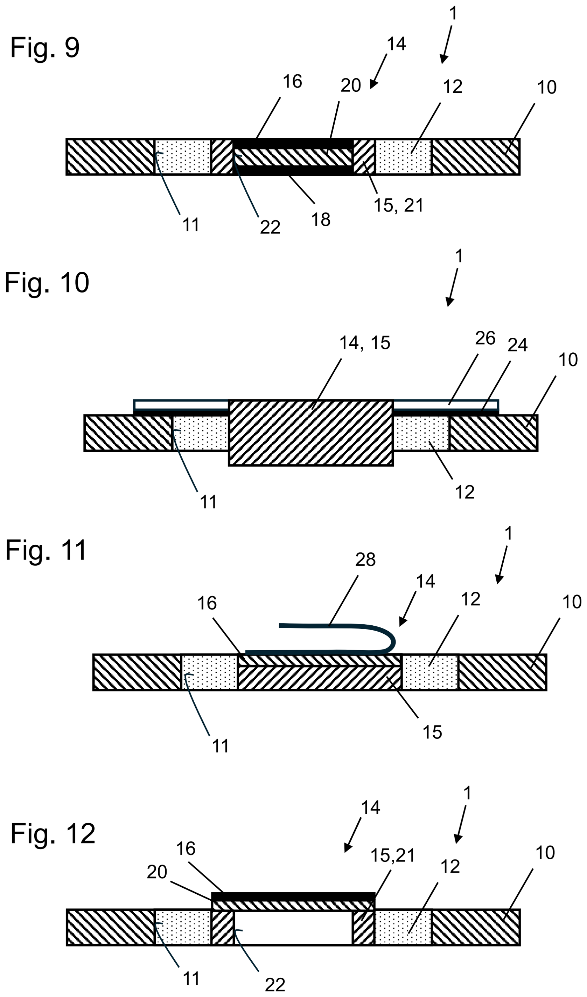

Figur 9 zeigt ein neuntes Ausführungsbeispiel einer elektrischen Durchführung 1, welches weitgehend dem mit Bezug zur Figur 8 beschriebenen achten Ausführungsbeispiel entspricht. Das Verschlusselement 20 ist jedoch an beiden Stirnseiten bedeckt und weist an einer ersten Stirnseite das Abdeckmaterial 16 und an einer zweiten Stirnseite das weitere Abdeckmaterial 18 auf. Die Abdeckmaterialien 16, 18 können identisch oder verschieden gewählt sein. Insbesondere kann das weitere Abdeckmaterial 18 so ausgewählt sein, dass es bei Ausgestaltung der elektrischen Durchführung 1 als Batteriedeckel oder als Teil eines Batteriegehäuses gegenüber den in der Batterie enthaltenen Medien, insbesondere gegenüber dem Elektrolyten, beständig ist.

Figur 10 zeigt in einer schematischen Darstellung ein zehntes Ausführungsbeispiel einer elektrischen Durchführung 1.

Die elektrische Durchführung 1 umfasst einen Grundkörper 10 mit einer Öffnung 11. Durch die Öffnung 11 ist ein Anschlussstift 14 hindurchgeführt, der wie in der ersten Ausführungsform aus einem massiven einstückigen Kern 15 besteht und in der Öffnung 11 über ein Fixiermaterial 12 gehalten ist. Das Fixiermaterial 12 dichtet dabei sowohl gegenüber einer Wandung der Öffnung 11 als auch gegenüber dem Anschlussstift 14 ab, so dass die Öffnung 11 durch das Fixiermaterial 12 abgedichtet ist. Das Fixiermaterial 12, welches ein Glasmaterial, Glaskeramikmaterial oder Keramikmaterial ist, ist an die Oberflächen der Öffnung 11 des Grundkörpers 10 und des Anschlussstifts 14 angeschmolzen.

Der Anschlussstift 14 ragt in dem in Figur 10 dargestellten Beispiel auf beiden Seiten über den Grundkörper 10 hinaus, wobei das Fixiermaterial 12 bündig mit dem Grundkörper 10 ausgebildet ist. An einer ersten Seite, die beispielsweise bei Verwendung der elektrischen Durchführung 1 als Batteriedeckel oder Teil eines Batteriedeckels nach außen wist, ist zusätzlich ein Anschlusspad 26 angeordnet. Dieses ist elektrische leitfähig mit dem Anschlussstift 14 verbunden und wird zusätzlich über einen Isolator 24 an dem Fixiermaterial 12 und dem Grundkörper 10 gehalten. Der Isolator 24 kann beispielsweise ein Klebstoff sein. Das Verbinden des Anschlusspads 26 und dem Anschlussstift 14 kann beispielsweise über Löten oder Schweißen, insbesondere über Laserschweißen erfolgen. Das Anschlusspad 26 kann aus demselben Material wie der Anschlussstift 14 bestehen, es kann aber auch alternativ dazu ein anderes Material ausgewählt werden. Über das Anschlusspad 25 wird eine für eine elektrische Kontaktierung zur Verfügung stehende Fläche vorteilhafterweise vergrößert.

Figur 11 zeigt schematisch ein elftes Ausführungsbeispiel einer elektrischen Durchführung 1, welches weitgehend dem mit Bezug zur Figur 8 beschriebenen achten Ausführungsbeispiel entspricht. Zusätzlich weist die elektrische Durchführung 1 hier eine Anschlussfahne 28 auf, welche mit dem Abdeckmaterial 16 des Anschlussstifts 14 verbunden ist, beispielsweise mittels Löten oder Schweißen. Das Material der Anschlussfahne 28 ist dabei bevorzugt identisch zu dem Abdeckmaterial 16 gewählt. Die Anschlussfahne 28 erleichtert eine elektrische Kontaktierung der elektrischen Durchführung 1.

Figur 12 zeigt ein zwölftes Ausführungsbeispiel für eine elektrische Durchführung 1. Das zwölfte Ausführungsbeispiel entspricht dem mit Bezug zur Figur 6 beschriebenen sechsten Ausführungsbeispiel, die Durchgangsöffnung 22 in dem als Hülsenelement 21 ausgebildeten Kern 15 ist hier aber nicht offen. Der Anschlussstift 14 weist hier zusätzlich ein Verschlusselement 20 auf, welches die Durchgangsöffnung 22 abdichtet. Abweichend von dem siebten Ausführungsbeispiel der Figur 7 ist das Verschlusselement 20 hier deckelförmig ausgebildet und greift nicht in die Durchgangsöffnung 22 des als Hülsenelement 21 ausgebildeten Kerns 15 ein. Das deckelförmige Verschlusselement 20 ist lediglich an einer Stirnseite des Hülsenelements 21 mit diesem verbunden, beispielsweise mittels Schweißen oder Löten.

Das Verschlusselement 20 weist zudem ein Abdeckmaterial 16 auf, welches von dem Material des Verschlusselements 20 verschieden gewählt ist. Das Material des Verschlusselements ist bevorzugt ein Kupfermaterial, wobei dieses identisch zu dem Kupfermaterial des Kerns 15 sein kann. Bei dem Abdeckmaterial 16 handelt es sich beispielsweise um Aluminium oder um eine Aluminiumlegierung.

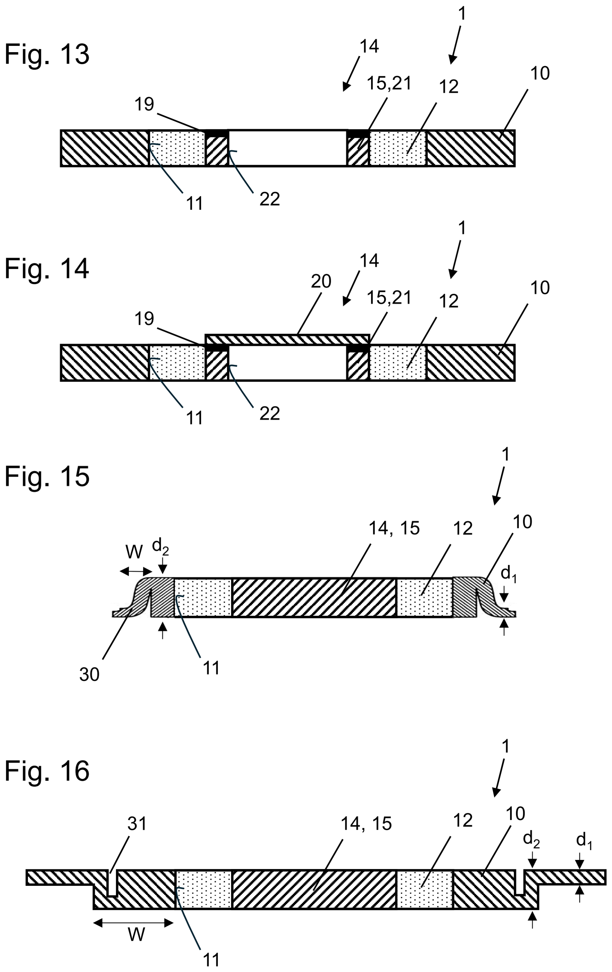

Figur 13 zeigt schematisch ein dreizehntes Ausführungsbeispiel für eine elektrische Durchführung 1. Das dreizehnte Ausführungsbeispiel ähnelt dem mit Bezug zur Figur 6 beschriebenen sechsten Ausführungsbeispiel. Abweichend davon ist der Kern 15 an einer seiner Stirnseiten mit einem Zwischenmaterial 19 versehen, beispielsweise mittels Beschichten oder Plattieren. Das Zwischenmaterial 19 ist abweichend von dem Material des Kerns 15 gewählt und kann beispielsweise Aluminium oder eine Aluminiumlegierung sein. In einer weiteren Variante kann der Kern 15 auch an beiden Stirnseiten mit einem Zwischenmaterial 19 versehen sein.

Figur 14 zeigt schematisch ein vierzehntes Ausführungsbeispiel für eine elektrische Durchführung 1. Das vierzehnte Ausführungsbeispiel entspricht weitgehend dem mit Bezug zur Figur 13 beschriebenen dreizehnten Ausführungsbeispiel. Der Anschlussstift 14 weist hier jedoch zusätzlich ein Verschlusselement 20 auf. Der Kern 15 weist an seiner zum Verschlusselement 20 weisenden Stirnseite das Zwischenmaterial 19 auf. Bevorzugt sind die Materialien für das Verschlusselement 20 und das Zwischenmaterial 19 beide ausgewählt aus Aluminium und Aluminiumlegierungen, so dass diese sich gut mittels Schweißen oder Löten miteinander verbinden lassen.

Neben den in den Figuren 7 und 8 sowie den Figuren 12 und 14 dargestellten Varianten des Verschlusselements 20 sind auch weitere Ausgestaltungen denkbar. Beispielsweise kann die stopfenartige Ausgestaltung der Figuren 7 und 8 mit der deckelartigen Ausgestaltung der Figuren 12 und 14 kombiniert werden, so dass das Verschlusselement 20 sowohl an einer Stirnseite als auch an der Wandung der Durchgangsöffnung 22 an das Hülsenelement 21 angrenzt.

Figur 15 zeigt ein weiteres Ausführungsbeispiel einer elektrischen Durchführung 1, welche ähnlich zum erstem Ausführungsbeispiel der Figur 1 ausgebildet ist, wobei der Grundkörper 10 aber zusätzlich einen flexiblen Flansch 30 umfasst, über den der Grundkörper 10 mit weiteren Elementen verbunden werden kann, beispielsweise mit weiteren Bestandteilen eines Gehäuses. Der flexible Flansch 30 wird beispielsweise durch Umformen des Grundkörpers 10 erhalten und weist einen Übergangsbereich mit einer Weite W auf, innerhalb dem ein flacher Abschnitt des Grundkörpers 10 in einen Einglasungsabschnitt mit einer Dicke d₂ übergeht, welche größer ist als die Dicke d₁ des flachen Abschnitts des Grundkörpers 10. Der Grundkörper 10 ist in dem Übergangsbereich flexibel und nachgiebig, so dass durch den flexiblen Flansch 30 der Bereich mit der Öffnung 11 mechanisch entkoppelt wird. Entsprechend werden mechanische Spannungen anderer Teile des Gehäuses nicht auf das Fixiermaterial 12 übertragen. Des Weiteren kann die Dicke d₂ innerhalb des Einglasungsabschnitts in einem weiten Bereich frei gewählt werden, so dass sich eine Einglasungslänge unabhängig von anderen Dimensionen des Grundkörpers 10 bzw. eines Gehäuses mit dem Grundkörper 10 einstellen lässt.

Figur 16 zeigt eine elektrische Durchführung 1, bei der in dem Grundkörper 10 eine Entlastungseinrichtung vorgesehen ist, welche hier beispielhaft als Vertiefung oder Nut 31, vorzugsweise als umlaufende Nut oder umlaufende Vertiefung, ausgebildet ist.

Der Grundkörper 10 weist einen Verstärkungsbereich mit einer Breite W auf, der an die Öffnung 11 angrenzt und innerhalb dem der Grundkörper 10 eine erhöhte Dicke d₂ aufweist. Außerhalb des Verstärkungsbereichs weist der Grundkörper 10 die geringere Dicke d₁ auf.

Die Nut 31 der Entlastungseinrichtung ist in dem in Figur 16 dargestellten Beispiel exemplarisch auf der Seite der elektrischen Durchführung 1 angeordnet, welche bei Bildung eines Gehäuses nach außen weist. Selbstverständlich könnte sie auch an der anderen Seite des Gehäuses angeordnet sein. Auch zwei an gegenüberliegenden Seiten des Grundkörpers 10 angeordnete Nuten 31 oder Vertiefungen können als Entlastungseinrichtung dienen. Anstelle einer Nut 31 kann auch eine Folge nebeneinander liegender Einstiche vorgesehen sein.

Durch die Entlastungseinrichtung wird ein thermischer Fluss durch den Grundkörper 10 reduziert, also eine thermische Barriere geschaffen, und/oder mechanische Belastung des Grundkörpers 10 senkrecht zur Achse des Anschlussstiftes 14 verringert, da der Grundkörper 10 in Richtung senkrecht zur Achse des Anschlussstiftes 14 verformbar, bevorzugt reversibel verformbar ist. Dies führt dazu, dass in das Fixiermaterial 12 weniger Spannungen, insbesondere keine Zugspannungen, die auf das Fixiermaterial 12 wirken und dadurch die Kompression auf das Fixiermaterial 12 reduzieren, eingebracht werden, wodurch die Dichtheit der Durchführung 1 bei thermischen und mechanischen Belastungen sichergestellt wird.

Die in den Figuren 15 und 16 skizzierten Ausführungsformen des Grundkörpers 10 lassen sich insbesondere auch auf die in den Figuren 2 bis 14 dargestellten Varianten der elektrischen Durchführung 1 anwenden.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: elektrische Durchführung

- 10: Grundkörper
- 11: Öffnung
- 12: Fixiermaterial
- 14: Anschlussstift
- 15: Kern

- 16: Abdeckmaterial
- 18: weiteres Abdeckmaterial
- 19: Zwischenmaterial

- 20: Verschlusselement
- 21: Hülsenelement
- 22: Durchgangsöffnung

- 24: Isolator
- 26: Anschlusspad
- 28: Anschlussfahne

- 30: flexibler Flansch
- 31: Nut

## Patentansprüche

1. Elektrische Durchführung (1) umfassend einen Grundkörper (10) mit einer Öffnung (11) und einen Anschlussstift (14), der durch die Öffnung (11) im Grundkörper (10) hindurchgeführt ist und mit einem Fixiermaterial (12) gehalten ist, welches die Öffnung (11) abdichtet, wobei
das Fixiermaterial (12) ein Glasmaterial, Glaskeramikmaterial oder eine Keramik ist, **dadurch gekennzeichnet, dass**
der Anschlussstift (14) einen Kern (15) aufweist oder aus diesem besteht, wobei der Kern (15) direkt an das Fixiermaterial (12) angrenzt und aus einem Kupferwerkstoff besteht, wobei der Kupferwerkstoff in einem geglühten Zustand nach dem Ausbilden der elektrischen Durchführung (1) eine 0,2% Dehngrenze von mindestens 150 N/mm² aufweist.

2. Elektrische Durchführung (1) nach Anspruch 1, **dadurch gekennzeichnet, dass** der Kupferwerkstoff ein dispersionsgehärteter Kupferwerkstoff ist oder eine Kupferlegierung ist, wobei die Kupferlegierung ausgewählt ist aus Cu-Al₂O₃, CuBe, CuCoNiBe, CuCr, CuZr, CuNiSi und CuNiSiCr.

3. Elektrische Durchführung (1) nach Anspruch 1 oder 2, **dadurch gekennzeichnet, dass** der Kupferwerkstoff mindestens 95 Gew.-%, bevorzugt mindestens 98 Gew.-%, besonders bevorzugt mindestens 99 Gew.-% Kupfer enthält und zusätzlich mindestens 0,1 Gew.-%, bevorzugt mindestens 0,5 Gew.-%, besonders bevorzugt mindestens 0,6 Gew.-% Al₂O₃ und/oder mindestens 0,03 Gew.-% Bor enthält.

4. Elektrische Durchführung (1) nach einem der Ansprüche 1 bis 3, **dadurch gekennzeichnet, dass** der Anschlussstift (14) an zumindest einer Stirnseite teilweise oder vollständig mit einem elektrisch leitenden Abdeckmaterial (16, 18) bedeckt ist.

5. Elektrische Durchführung (1) nach Anspruch 4, **dadurch gekennzeichnet, dass** das Abdeckmaterial (16, 18) mittels Plattieren, Galvanisieren, Beschichten, Aufdampfen, Schweißen oder Löten auf die Stirnfläche des Anschlussstifts (14) aufgebracht ist.

6. Elektrische Durchführung (1) nach Anspruch 4 oder 5, **dadurch gekennzeichnet, dass** das Abdeckmaterial (16, 18) ausgewählt ist aus Aluminium, einer Aluminiumlegierung, AlSiC, Kupfer, eine Kupferlegierung, Molybdän, Nickel oder Nickellegierungen, Palladium, Silber oder Gold.

7. Elektrische Durchführung (1) nach einem der Ansprüche 1 bis 6, **dadurch gekennzeichnet, dass** der Kern (15) des Anschlussstifts (14) als Hülsenelement (21) mit einer Durchgangsöffnung (22) ausgebildet ist.

8. Elektrische Durchführung (1) nach Anspruch 7, **dadurch gekennzeichnet, dass** der Anschlussstift (14) ein Verschlusselement (20) aufweist, welches die Durchgangsöffnung (22) in dem Hülsenelement (21) des Anschlussstifts (14) verschließt.

9. Elektrische Durchführung (1) nach Anspruch 8, **dadurch gekennzeichnet, dass** das Verschlusselement (20) an einer Stirnseite des Hülsenelements (21) mit diesem verbunden ist und/oder dass das Verschlusselement (20) an einer Wand der Durchgangsöffnung (22) mit dem Hülsenelement (21) verbunden ist.

10. Elektrische Durchführung (1) nach einem der Ansprüche 7 bis 9, **dadurch gekennzeichnet, dass** das Verschlusselement (20) zumindest an seiner an das Hülsenelement (21) angrenzenden Oberfläche aus Kupfer, einer Kupferlegierung, Aluminium oder einer Aluminiumlegierung besteht.

11. Elektrische Durchführung (1) nach einem der Ansprüche 1 bis 10, **dadurch gekennzeichnet, dass**
ein erster Ausdehnungskoeffizient des Grundkörpers (10) größer ist als ein zweiter Ausdehnungskoeffizient des Fixiermaterials (12), wobei ein Unterschied zwischen dem ersten Ausdehnungskoeffizienten und dem zweiten Ausdehnungskoeffizienten bevorzugt größer ist als 3 ppm/K.

12. Elektrische Speichereinrichtung, insbesondere eine Batterie oder ein Kondensator, umfassend ein Gehäuse mit mindestens einer elektrischen Durchführung (1) gemäß einem der Ansprüche 1 bis 11.

13. Elektrisch angetriebener Kompressor umfassend ein Gehäuse mit mindestens einer elektrischen Durchführung (1) gemäß einem der Ansprüche 1 bis 11.

14. Elektrischer Steckverbinder umfassend eine elektrische Durchführung (1) gemäß einem der Ansprüche 1 bis 11.
